# EUROPEAN PATENT APPLICATION

(11) **EP 2 962 742 A1**
(43) Date of publication of application: **06.01.2016**
(21) Application number: 14757675.5
(22) Date of filing: 10.02.2014
(51) Int. Cl.: B01D 45/14, F01D 25/18, F02C 7/05

(54) **MIST SEPARATOR**

(30) Priority: 28.02.2013 JP 2013039389
(71) Applicant: Kawasaki Jukogyo Kabushiki Kaisha, Kobe-shi, Hyogo 650-8670 (JP)
(72) Inventor: FUJII, Hiroshi, Akashi-shi Hyogo 673-8666 (JP); SHIMIZU, Hirohito, Akashi-shi Hyogo 673-8666 (JP); YASUDA, Ryo, Akashi-shi Hyogo 673-8666 (JP); YAMAZAKI, Yuji, Akashi-shi Hyogo 673-8666 (JP); ARISAWA, Hidenori, Akashi-shi Hyogo 673-8666 (JP); KAZARI, Masahide, Akashi-shi Hyogo 673-8666 (JP); TANAKA, Kazuo, Akashi-shi Hyogo 673-8666 (JP)
(74) Representative: von Kreisler Selting Werner - Partnerschaft von Patentanwälten und Rechtsanwälten mbB
(86) International application number: PCT/JP2014/053027
(87) International publication number: WO 2014/132786

(57) **Abstract**

A mist separator for separating liquid mist from a gas containing the liquid mist includes a rotor fixed to a hollow rotary shaft and includes main rotating vanes; and a stator axially juxtaposed to the rotor. The stator includes main fixed vanes located downstream of the main rotating vanes on a flow path for the gas; and a cover that covers outer peripheries of the main fixed vanes and the main rotating vanes. The main fixed vanes are formed so as to cause the gas to flow radially inward from the outer peripheries thereof while a flow rate of the gas is decreased, and the cover is provided with a cover discharge port to discharge a recovery liquid which is a collection of the liquid mist to the outside of the cover.

## Description

### CROSS REFERENCE TO THE RELATED APPLICATION

This application is based on and claims Convention priority to Japanese patent application No. 2013-039389, filed February 28, 2013, the entire disclosure of which is herein incorporated by reference as a part of this application.

### BACKGROUND OF THE INVENTION

### (Field of the Invention)

The present invention relates to a mist separator that separates liquid mist from gas containing the liquid mist.

### (Description of Related Art)

Within an engine of an aircraft or a vehicle, an oil comes into contact with a bearing to be turned into mist when the oil is supplied mainly to the bearing, and thus generally, a mist separator which separates such oil mist from air is provided (e.g., see Patent Document 1). The oil turned into mist flows from a bearing chamber having a high pressure into the mist separator having a low pressure.

### [Related Art Document]

### [Patent Document]

[Patent Document 1] JP Laid-open Patent Publication No. 2003-004000

### SUMMARY OF THE INVENTION

In such a mist separator, if a pressure difference is increased in separating oil mist, the pressure in the bearing chamber is increased, and oil leak occurs from a portion that seals the bearing chamber. When the oil leak occurs, not only the amount of oil consumed is increased but also it may lead to insufficient lubrication of the bearing.

In order to solve the above-described problem, an object of the present invention is to provide a mist separator which is compact and has high reliability by reducing a pressure difference between the inside and the outside of the mist separator while maintaining high separation performance using a centrifugal force.

In order to achieve the above-described object, a mist separator according to the present invention is a mist separator for separating a liquid mist from a gas containing the liquid mist, including: a rotor fixed to a hollow rotary shaft and including main rotating vanes; and a stator axially juxtaposed to the rotor, the stator including main fixed vanes located downstream of the main rotating vanes on a flow path for the gas, and a cover to cover outer peripheries of the main fixed vanes and the main rotating vanes, in which the main fixed vanes are formed so as to cause the gas to flow radially inward from the outer peripheries thereof while a flow rate of the gas is decreased, and the cover is provided with a cover discharge port to discharge a recovery liquid which is a collection of the liquid mist to an outside of the cover.

According to this configuration, since the fixed vanes of the stator cause the gas having flowed from the rotor thereto to flow radially inward while the flow rate of the gas is decreased, it is possible to reduce the pressure difference between the inside and the outside of the mist separator. Therefore, liquid leakage is prevented while high separation performance is exerted by using a centrifugal force of the rotor, whereby the reliability of a device in which the mist separator is provided is improved. In addition, since the rotor and the stator are axially juxtaposed to each other, the radial dimension of the mist separator is reduced and the mist separator can be made compact.

In the mist separator according to one embodiment of the present invention, the stator may further include introduction-side fixed vanes located upstream of the main rotating vanes on the flow path for the gas. According to this configuration, since the fixed vanes are provided at the introduction side in addition to the main fixed vanes, the pressure difference between the inside and the outside of the mist separator is further reduced.

In one embodiment of the present invention, the mist separator may further include an annular introduction-side fixed vane cover that covers a front side of the introduction-side fixed vanes, wherein the introduction-side fixed vane cover is provided with a discharge slit to discharge a recovery liquid which is a collection of the liquid mist to an outside of the introduction-side fixed vane cover. In this case, the mist separator may further include : a housing to accommodate the rotor and the stator therein; and an introduction port located radially outward of the cover in the housing and to introduce the gas into an introduction space formed between the housing and the cover from an oblique direction relative to a radial direction, in which the discharge slit is provided in a region within 180° at an upstream side in a swirling direction of the gas from the introduction port in a circumferential direction of the introduction-side fixed vane cover. According to this configuration, since the discharge slit through which the liquid mist is discharged is also provided in the cover for the introduction-side fixed vanes, ability to separate the liquid mist is enhanced. In addition, since the discharge slit is provided only in the region close to the introduction port for the gas and in which the pressure internal to the introduction-side fixed vanes is high, oil is enabled to be effectively separated while an increase in pressure loss is suppressed.

In one embodiment of the present invention, the cover discharge port may include a plurality of main discharge ports provided at equal intervals in a circumferential direction of the cover and a sub discharge port provided between the adjacent main discharge ports and having an opening area smaller than that of each main discharge port, the cover may have a plurality of bosses provided at equal intervals in the circumferential direction thereof and projecting radially inward, and the main discharge ports of the cover may be provided adjacently to and upstream of the bosses in a swirling direction of the gas. According to this configuration, each main discharge port having a relatively large opening area is provided in a portion upstream of the boss where the gas is compressed by the boss and the pressure thereof is increased, and the sub discharge port having a small opening area is provided between these main discharge ports, thereby enabling the liquid mist to be effectively separated while an increase in pressure loss is suppressed.

In the embodiment having the introduction-side fixed vanes, an outwardly-projecting cover flange may be provided at a portion of an outer peripheral surface of the cover between the cover discharge port and the introduction-side fixed vanes. According to this configuration, oil discharged through the cover discharge port to the outside of the cover is prevented from flowing to the introduction-side fixed vanes side, and is assuredly discharged to the outside without flowing into the mist separator again.

In one embodiment of the present invention, a gap may be defined between an inner peripheral surface of the cover and an outer periphery end of each main fixed vane. According to this configuration, the liquid mist having moved along the inner peripheral surface of the cover is prevented from moving along the fixed vanes to the radially inner side, and thus it is possible to efficiently collect the liquid mist.

In one embodiment of the present invention, the mist separator may be disposed, for example, within an accessory gear box of an aircraft engine to separate oil from air containing oil mist. The mist separator is enabled to be reduced in size while oil separation performance thereof or the pressure difference between the inside and the outside of the mist separator is maintained or improved. Thus, the mist separator is suitable for an aircraft engine which particularly requires size reduction and weight reduction of a device provided therein.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a perspective view showing an engine in which a mist separator according to a first embodiment of the present invention is used;
Fig. 2 is a longitudinal cross-sectional view showing the mist separator according to the first embodiment of the present invention;
Fig. 3 is a perspective view showing a rotor used in the mist separator in Fig. 2;
Fig. 4 is a front view schematically showing a stator used in the mist separator in Fig. 2;
Fig. 5 is a perspective view showing the stator used in the mist separator in Fig. 2;
Fig. 6 is a longitudinal cross-sectional view showing a mist separator according to a second embodiment of the present invention;
Fig. 7A is a front view showing an introduction-side fixed vane unit used in the mist separator in Fig. 6;
Fig. 7B is a side view showing an introduction-side fixed vane unit used in the mist separator in Fig. 6;
Fig. 7C is a rear view showing an introduction-side fixed vane unit used in the mist separator in Fig. 6; and
Fig. 8 is a longitudinal cross-sectional view showing a mist separator according to a third embodiment of the present invention.

### DESCRIPTION OF EMBODIMENTS

Hereinafter, embodiments of the present invention will be described with reference to the drawings.

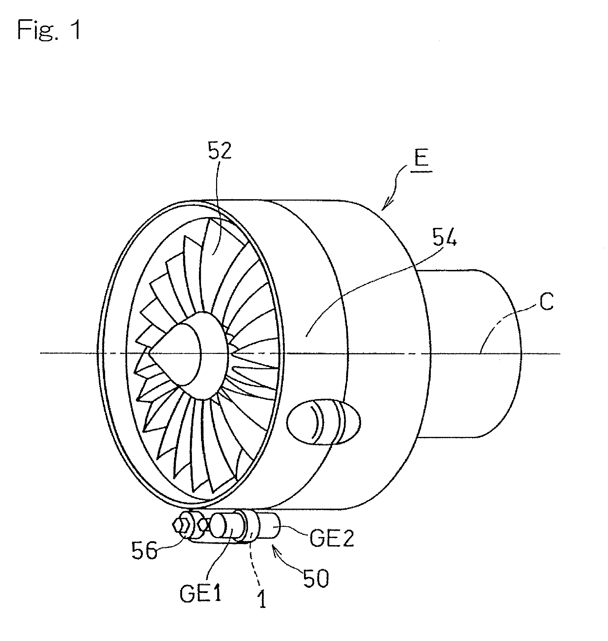

A mist separator according to the present invention separates liquid mist from a gas containing the liquid mist. A mist separator 1 according to a first embodiment of the present invention shown in Fig. 1 is configured as an oil mist separator which is disposed within an accessory gear box (AGB) 50 of an engine E for an aircraft and separates an oil mist from a gas (air in this example) A containing the oil mist, which is the liquid mist. The engine E is, for example, a fan engine, and the AGB 50 is mounted to an outer peripheral portion of a fan case 54 that covers a fan 52 provided at a front portion of an engine body. The outer peripheries of the fan case 54 and the AGB 50 are covered with an engine nacelle, which is not shown.

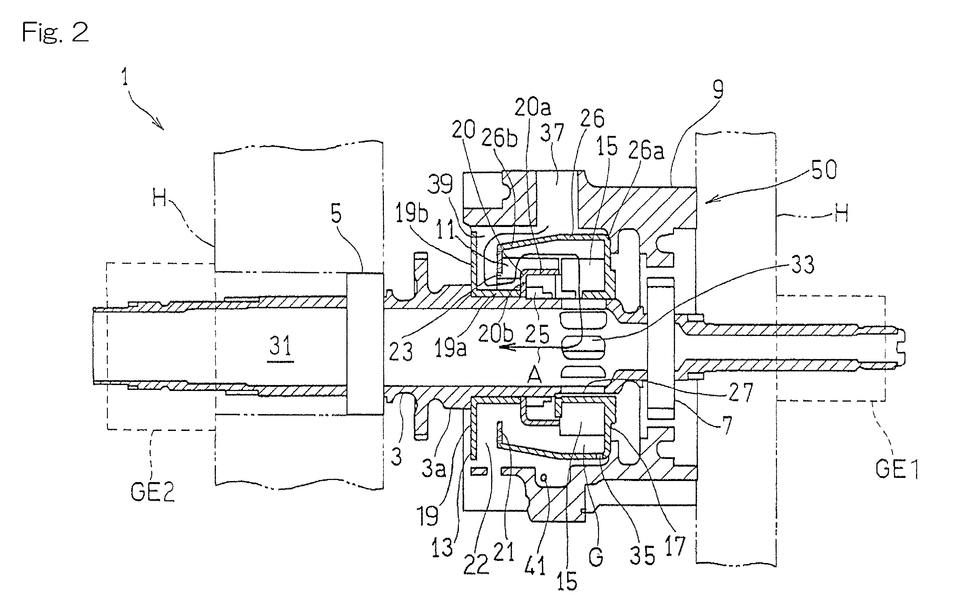

The AGB 50 is a device for driving auxiliary machines such as generators GE1, GE2, and various pumps 56, and has a plurality of gears arranged therein so as to sequentially mesh with each other. As shown in Fig. 2, in the first embodiment, the mist separator 1 is provided on a hollow rotary shaft 3 of one gear of the plurality of gears. The rotary shaft 3 is rotatably supported by an AGB housing H via a first bearing 5, is also rotatably supported by a housing 9 of the mist separator 1 fixed to the AGB housing H, via a second bearing 7, and drives, for example, the generators GE1, GE2. The rotary shaft 3 is provided parallel to a rotation axis C of the engine E. In this embodiment, a side supported by the first bearing 5 (the left side in Fig. 2) is a front side of the engine E, and a side supported by the second bearing 7 (the right side in Fig. 2) is a rear side of the engine E.

The mist separator 1 includes a radial flow type rotor 13 having main rotating vanes 11, and a stator 17 having main fixed vanes 15. The rotor 13 and the stator 17 are axially juxtaposed to each other, whereby the main rotating vanes 11 and the main fixed vanes 15 are axially juxtaposed to each other. In the present embodiment, the main rotating vanes 11 are disposed at the front side, and the main fixed vanes 15 are disposed at the rear side.

More specifically, the rotor 13 includes a duct member 19, a plurality of main rotating vanes 11, a ring member 20 which has an L cross-sectional shape and supports the main rotating vanes 11, and an annular end plate 21 which is fixed to front ends of the main rotating vanes 11. The duct member 19 includes a cylindrical fit portion 19a which is to be fitted on the outer periphery of the rotary shaft 3, and a collar-shaped flange portion 19b which is provided so as to project radially outward from the front end of the fit portion 19a. The ring member 20 includes a cylindrical portion 20a and a collar portion 20b which extends radially inward from the front end of the cylindrical portion 20a. An introduction path 22 which introduces the gas A from the AGB 50 to the main rotating vanes 11 is formed between the flange portion 19b and the end plate 21. An inflow port 23 for the gas A is formed radially inward of a front-end radially inner portion of each main rotating vane 11.

The rotor 13 is fixed on the rotary shaft 3 so as to be non-rotatable relative to the rotary shaft 3 by: bringing the collar portion 20b of the ring member 20 into contact with the rear end of the fit portion 19a in a state where the front surface of an inner peripheral portion of the flange portion 19b is in contact with a positioning projection 3a formed on the outer peripheral surface of the rotary shaft 3; and fastening the rotor 13 frontward with a self-lock nut 25, which is a fastening member, screwed to a male screw portion on the outer periphery of the rotary shaft 3. In this way, the duct member 19 and the ring member 20 are fixed on the rotary shaft 3 so as to be non-rotatable relative to the rotary shaft 3.

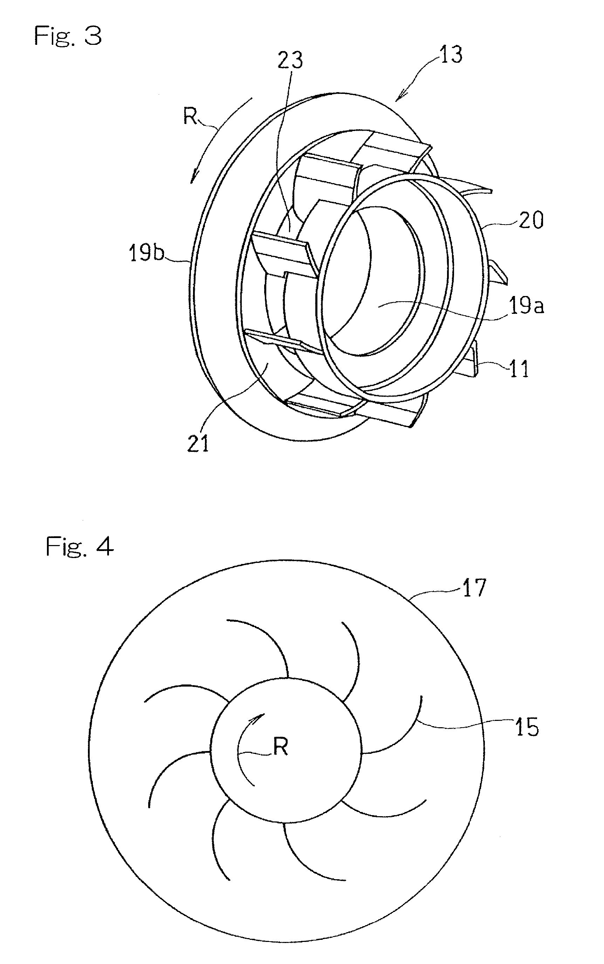

As shown in Fig. 3, each main rotating vane 11 of the rotor 13 is curved so as to be tilted rearward relative to a rotation direction R of the rotary shaft 3. However, each main rotating vane 11 may not be tilted and may be provided so as to extend linearly along the radial direction, or may be curved so as to be tilted frontward relative to the rotation direction R.

As shown in Fig. 2, the stator 17 includes a cover 26 that covers the outer peripheries of the main fixed vanes 15 and the outer periphery of the rotor 13. The cover 26 includes a fixed vane outer tubular portion 26a which has a substantially cylindrical shape and covers the outer peripheries of the main fixed vanes 15 of the stator 17, and a rotating vane outer tubular portion 26b which extends from the fixed vane outer tubular portion 26a toward the rotor 13 side (the front side) so as to be reduced in diameter in a tapered manner. A front end portion of the rotating vane outer tubular portion 26b confronts the outer peripheral surface of the end plate 21 with a slight gap being defined therebetween. By the cover 26, an air having flowed radially outward from the main rotating vanes 11 is guided to the outer periphery side of the main fixed vanes 15.

As schematically shown in Fig. 4, the main fixed vanes 15 of the stator 17 are provided as a plurality of swirler vanes that are curved so as to be inclined rearward relative to the rotation direction R of the rotor and are arranged at equal intervals in a circumferential direction. The air introduced to the outer periphery side of the main fixed vanes 15 by the cover 26 in Fig. 2 further flows radially inward from the outer peripheries of the main fixed vanes 15 by the main fixed vanes 15 while the flow rate of the air is decreased due to swirling.

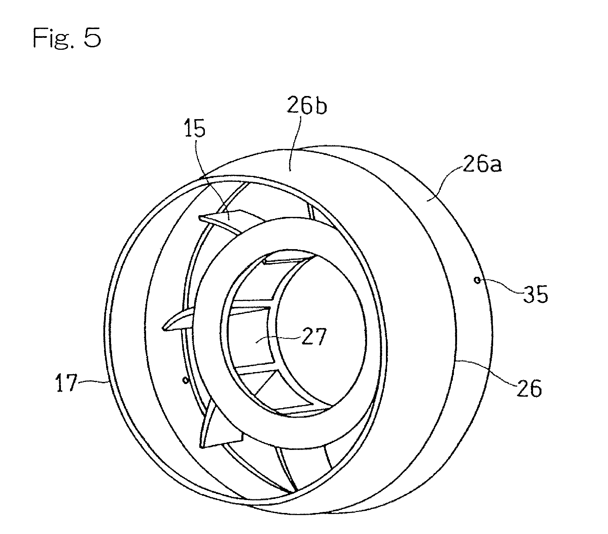

Furthermore, as shown in Fig. 5, openings in the radial direction are formed in a radially inner portion of the stator 17 and between radially inner end portions of the respective main fixed vanes 15, and those openings form outflow ports 27 through which the air flows out to a hollow portion of the rotary shaft 3. Meanwhile, a plurality of communication ports 33 which provide communication between the hollow portion 31 and the outside of the rotary shaft 3 are provided in the rotary shaft 3 shown in Fig. 2 at equal intervals in the circumferential direction. A relative axial position between the stator 17 and the rotary shaft 3 is set such that the axial positions of the outflow ports 27 of the stator 17 substantially overlap the axial positions of the communication ports 33 of the rotary shaft 3.

As shown in Fig. 5, the cover 26 is formed with cover discharge ports 35 for discharging a recovery liquid, which is a collection of the liquid mist, to the outside of the cover 26. More specifically, a plurality of through holes (four in this example) each extending in the radial direction are provided in a rear portion of the fixed vane outer tubular portion 26a of the cover 26 and in the circumferential direction. Those through holes form the cover discharge ports 35. It should be noted that as shown in Fig. 2, the cover 26 is provided such that a gap G is defined between the inner peripheral surface thereof and the outer periphery end of each main fixed vane 15.

An introduction port 37 configured to introduce the gas A within the AGB 50 into the mist separator 1 is provided radially outward of the cover 26 in the housing 9 that accommodates the main rotating vanes 11 of the rotor 13 and the main fixed vanes 15 of the stator 17. The introduction port 37 is so formed as to introduce the gas A into an introduction space 39 defined between the housing 9 and the cover 26 from an oblique direction relative to the radial direction. In addition, a housing discharge port 41 that discharges a recovery liquid, which is a collection of the liquid mist, is provided in the housing 9.

Next, an operation of the mist separator 1 configured as described above will be described.

The gas A composed of air containing oil mist is present within the AGB 50 shown in Fig. 1 and, as shown in Fig. 2, the gas A is introduced through the introduction port 37 of the housing 9 into the housing 9. As shown in Fig. 2, the introduced gas A is introduced into the introduction space 39, which is formed between the housing 9 and the cover 26, obliquely relative to the radial direction, and subsequently is guided through the introduction path 22 between the flange portion 19b and the end plate 21 of the rotor 13 into the inflow ports 23.

The gas A having flowed from the inflow ports 23 into the cover 26 flows radially outward from each main rotating vane 11 by a centrifugal force generated due to rotation of each main rotating vane 11. At that time, the oil mist contained in the gas A is separated from the gas A, is attached as a recovery liquid to the inner peripheral surface of the rotating vane outer tubular portion 26b of the cover 26, and moves rearward along the inner peripheral surface of the rotating vane outer tubular portion 26b and the inner peripheral surface of the fixed vane outer tubular portion 26a by a centrifugal force of the rotor 13. The recovery liquid of the oil mist is discharged through the cover discharge ports 35 and the housing discharge port 41 provided in the housing 9, to the outside of the mist separator 1. The recovery liquid discharged to the outside is collected, for example, into a collection tank via a scavenging pump provided within the AGB 50.

Since the gap G is formed between the inner peripheral surface of the cover 26 and the outer periphery end of each main fixed vane 15, the oil mist having moved along the inner peripheral surface of the cover 26 is prevented from moving along each main fixed vane 15 directly toward the radially inner side, and is efficiently collected through the cover discharge ports 35.

Meanwhile, the gas A having flowed radially outward from each main rotating vane 11 moves along the inner peripheral surface of the cover 26 and flows to each main fixed vane 15 of the stator 17. The gas A flows through the outflow ports 27 of the stator 17 and the communication ports 33 of the rotary shaft 3 into the hollow portion 31 of the rotary shaft 3 while swirling along an inclination angle of each main fixed vane 15, passes through the interior of a housing of the generator GE1, and then is discharged to the outside.

Since the main fixed vanes 15 of the stator 17 cause the gas A having flowed from the rotor 13 thereto to flow radially inward while decreasing the flow rate of the gas A, it is possible to reduce the pressure difference between the inside and the outside of the mist separator 1. Therefore, liquid leakage is prevented while high separation performance is exerted by using the centrifugal force of the rotor 13. Because of this, it is possible to prevent oil from entering the engine E through a communication path between the AGB 50 and the engine E shown in Fig. 1. Furthermore, since the rotor 13 and the stator 17 are axially juxtaposed, the radial dimension of the mist separator 1 is reduced and the mist separator 1 can be made compact.

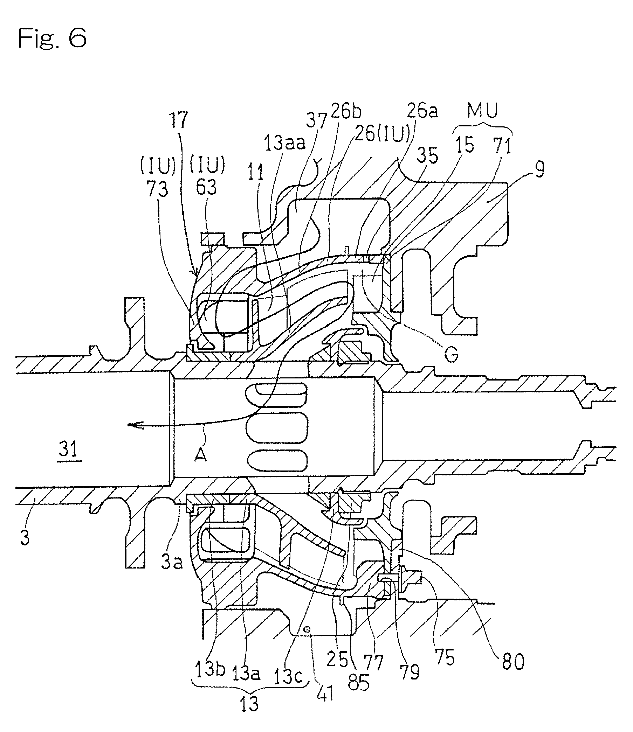

Next, referring to Fig. 6, a mist separator 1 according to a second embodiment of the present invention will be described. In the following description of the present embodiment, the differences from the first embodiment will be described in detail, and the description of the same configuration as in the first embodiment is omitted. In this mist separator 1, the stator 17 further includes introduction-side fixed vanes 63 in addition to the main fixed vanes 15. The introduction-side fixed vanes 63 are located upstream of the main rotating vanes 11 in a flow path for the gas A.

Specifically, the rotor 13 in the present embodiment has a main rotor portion 13a having the main rotating vanes 11, and a front spacer 13b and a rear spacer 13c which are disposed so as to be in contact with the front end and the rear end, respectively, of a section of the main rotor portion 13a which is fitted to the rotary shaft 3. The rotor 13 is fixed on the rotary shaft 3 so as to be non-rotatable relative to the rotary shaft 3 by fastening the rear spacer 13c frontward with a self-lock nut 25 in a state where the front spacer 13b is in contact with the positioning projection 3a formed on the outer peripheral surface of the rotary shaft 3. The main rotor portion 13a has an inclined surface portion 13aa in which its diameter increases from the front toward the rear. The main rotating vanes 11 are formed on the outer peripheral surface of the inclined surface portion 13aa as an oblique flow type, in which its diameter increases from the front toward the rear.

The stator 17 includes a main fixed vane unit MU including the main fixed vanes 15, and an introduction-side fixed vane unit IU including the introduction-side fixed vanes 63. The introduction-side fixed vane unit IU is disposed in front of the main fixed vane unit MU.

More specifically, the main fixed vane unit MU includes an annular support plate 71 and the main fixed vanes 15 supported on the support plate 71. The introduction-side fixed vane unit IU includes a cover 26 that covers the outer peripheries of the main fixed vanes 15 and the main rotating vanes 11, the introduction-side fixed vanes 63 formed at the front side of the rotating vane outer tubular portion 26b of the cover 26, and an introduction-side fixed vane cover 73 that covers the front side of the introduction-side fixed vanes 63, namely, the side opposite to the main rotating vanes 11 in the axial direction. The introduction-side fixed vanes 63 are provided as a plurality of swirler vanes which are inclined in the same direction as the direction in which the main fixed vanes 15 are inclined.

The stator 17, which includes the main fixed vane unit MU and the introduction-side fixed vane unit IU as described above, is fixed to the housing 9 by co-fastening the main fixed vane unit MU and the introduction-side fixed vane unit IU with screw members 75 such as bolts. Specifically, a plurality of (three in this example) bosses 77 are provided at an inner periphery side rear end portion of the cover 26 so as to project radially inward, and a screw hole 79 is provided in each boss 77. Mounting pieces 80 are provided so as to project at the radially inner side of the support plate 71 of the main fixed vane unit MU and the housing 9, and screw insertion holes are provided in the respective mounting pieces 80 and at positions corresponding to the screw holes 79. The screw members 75 are inserted into these screw insertion holes and screwed into the screw holes 79 in the bosses 77 of the cover 26, whereby the stator 17 is fixed to the housing 9.

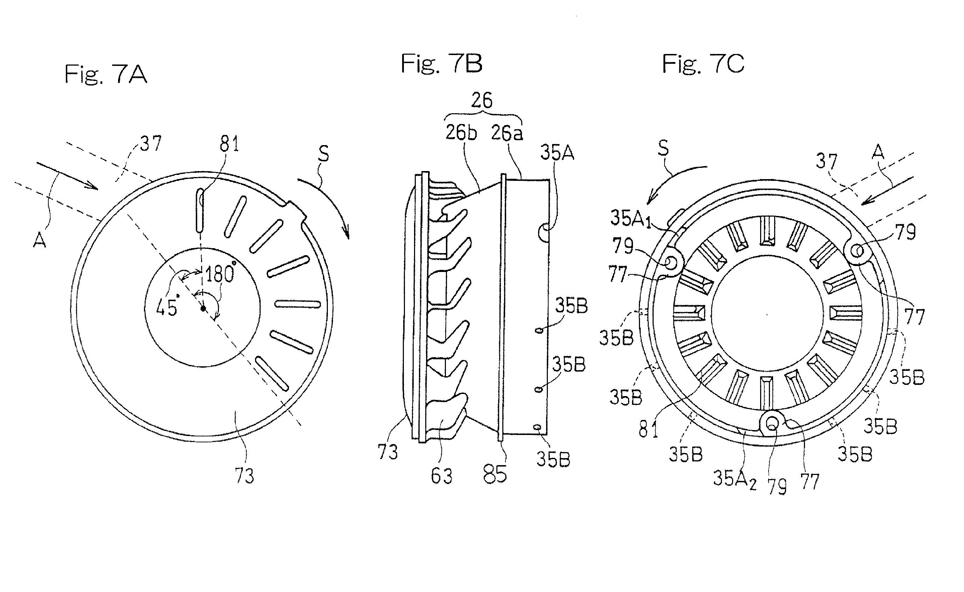

Moreover, as shown in Fig. 7B, in the present embodiment, the cover discharge ports 35 provided in the cover 26 include a plurality of (in this example, three which is the same number as the number of the bosses 77) main discharge ports 35A provided at equal intervals in the circumferential direction of the cover 26, and sub discharge ports 35B which are provided between the adjacent main discharge ports 35A, 35A at equal intervals and each have an opening area smaller than that of each main discharge port 35A.

More specifically, as shown in Fig. 7C, in the circumferential direction of the cover 26, a plurality of (three in this example) the sub discharge ports 35B are provided at equal intervals in the circumferential direction in a region between a main discharge port 35A₁ located at a first position in a swirling direction of the gas A from the introduction port 37 for the gas A and a main discharge port 35A₂ located at a second position therefrom, and a region between the main discharge port 35A₂ located at the second position therefrom and a main discharge port 35A₃ located at a third position therefrom, respectively. In other words, the sub discharge ports 35B are provided in a portion other than a section between the first and third main discharge ports 35A₁, 35A₃ located at an upper portion, of three sections between the three main discharge ports 35A₁ to 35A₃ located at equal intervals in the circumferential direction. In addition, each main discharge port 35A is provided adjacently to and upstream of the corresponding boss 77 in the swirling direction S of the gas A.

Since the cover discharge ports 35 are provided in the cover 26, oil mist separation is effectively enabled. However, pressure loss is increased due to the provision of the cover discharge ports 35, and thus it is preferred to arrange the cover discharge ports 35 so as to enable oil mist to be efficiently separated. In the present embodiment, each main discharge port 35A having a relatively large opening area is provided at a portion upstream of the corresponding boss 77 where the gas A is compressed by the boss 77 and the pressure thereof is increased, and the sub discharge ports 35B each having a smaller opening area are provided between these main discharge ports, thereby enabling oil to be effectively separated while suppressing an increase in pressure loss.

In addition, the introduction-side fixed vane cover 73 of the present embodiment is provided with discharge slits 81 for discharging a recovery liquid which is a collection of the oil mist to the outside of the introduction-side fixed vane cover 73. The discharge slits 81 are formed as through holes extending in the radial direction of the annular introduction-side fixed vane cover 73. As shown in Fig. 7A, in the introduction-side fixed vane cover 73 of the present embodiment, a plurality of (seven in this example) discharge slits 81 are provided at equal intervals in the circumferential direction within a certain region extending in the circumferential direction.

Since the discharge slits 81 are formed also in the fixed vane cover 73 which is additionally provided at the introduction side of the gas A, oil is enabled to be more effectively separated. Understandably, an increased number of the discharge slits 81 increases pressure loss, and thus in consideration of efficiency of the device and oil separation performance, the discharge slits 81 are provided in a specific region in the present embodiment in order to efficiently discharge oil.

That is, in the interior of the introduction-side fixed vanes 63, the pressure is low in a region distant from the introduction port 37 for the gas A in the flow direction of the gas A, and even if discharge slits 81 are provided in such a region in the introduction-side fixed vane cover 73, oil cannot be effectively discharged therethrough since air flows thereinto from the outside. Therefore, in the present embodiment, a plurality of (seven in this example) discharge slits 81 are provided in an upstream half region in the flow direction of the gas A from the introduction port 37 for the gas A in the circumferential direction of the introduction-side fixed vane cover 73, that is, a region within 180° at the upstream side from the introduction port for the gas A. More specifically, the seven discharge slits 81 are provided at equal intervals within a region of 45° to 180° in the flow direction of the gas A from the introduction port 37. Since the discharge slits 81 are provided only in the region which is close to the introduction port 37 and in which the pressure internal to the introduction-side fixed vane cover 73 is high as described above, oil is enabled to be effectively separated while an increase in pressure loss is suppressed.

Moreover, as shown in Fig. 7B, an outwardly-projecting cover flange 85 is provided at a portion of the outer peripheral surface of the cover 26 between the cover discharge ports 35 and the introduction-side fixed vanes 63. Specifically, in the shown example, the cover flange 85 is provided so as to project at an axial position near the boundary between the fixed vane outer tubular portion 26a having a substantially cylindrical shape and the rotating vane outer tubular portion 26b having a tapered shape. The cover flange 85 is provided so as to extend over the entire circumference of the outer peripheral surface of the cover 26.

Since this cover flange 85 is provided, oil discharged through the cover discharge ports 35 to the outside of the cover 26 is prevented from flowing to the introduction-side fixed vanes 63 side, and is assuredly discharged to the outside without flowing into the mist separator again. The axial position at which the cover flange 85 is provided is not limited to the shown example, and may be any position as long as the axial position is between the cover discharge ports 35 and the introduction-side fixed vanes 63. In addition, in the present embodiment, the cover flange 85 is formed in an annular shape having a constant projection height over the entire circumference, but may be formed so as to have different projection heights in accordance with the circumferential positons at which the cover discharge ports 35 are provided.

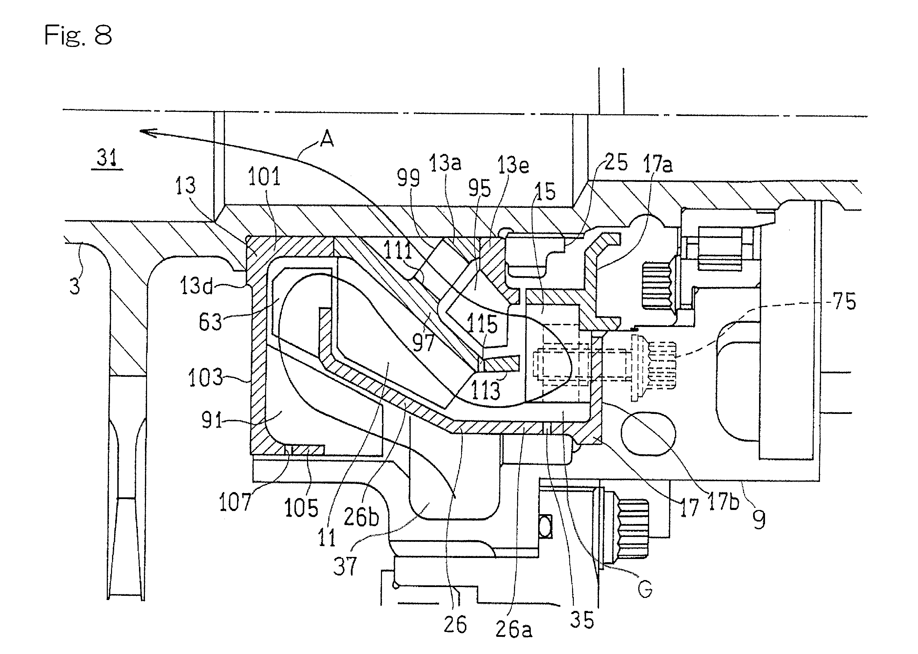

Next, a mist separator 1 according to a third embodiment of the present invention, shown in Fig. 8, will be described. In the following description of the present embodiment, the differences from the first embodiment will be described in detail, and the description of the same configuration as in the first embodiment is omitted. In this mist separator 1, the rotor 13 includes introduction-side rotating vanes 91. The introduction-side rotating vanes 91 are located upstream of the main rotating vanes 11 on the flow path of the gas A. In addition, the cover 26 of the stator 17 has introduction-side fixed vanes 63 located radially inward of the introduction-side rotating vanes 91. Moreover, the rotor 13 further has discharge-side rotating vanes 95 located downstream of the main fixed vanes 15 on the flow path of the gas A.

Specifically, the rotor 13 in the present embodiment includes a main rotor portion 13a having the main rotating vanes 11, an introduction-side rotor portion 13d having the introduction-side rotating vanes 91, a discharge-side rotor portion 13e having the discharge-side rotating vanes 95. The main rotor portion 13a has a conical surface portion 97 in which its diameter increases from the front toward the rear, and a support portion 99 which is provided rearward and radially inward of the conical surface portion 97 so as to protrude obliquely. A front and radially inner end portion of the conical surface portion 97 and a rear and radially inner end portion of the support portion 99 are fitted on the outer peripheral surface of the rotary shaft 3. The main rotating vanes 11 are formed on the outer peripheral surface of the conical surface portion 97 as an oblique flow type in which its diameter increases from the front toward the rear. The introduction-side rotor portion 13d, which has the introduction-side fixed vanes 63, is disposed in front of the main rotating vanes 11. The discharge-side rotor portion 13e, which has the discharge-side rotating vanes 95, is disposed in rear of the main rotating vanes 11.

The introduction-side rotor portion 13d has a fit portion 101 which is to be fitted on the outer peripheral surface of the rotary shaft 3, a flange portion 103 provided so as to project from the front end of the fit portion 101 in a flange shape, and a cylindrical portion 105 provided so as to project rearward from the radially outer end of the flange portion 103. The introduction-side rotating vanes 91 are provided radially outward of the introduction-side rotor portion 13d so as to be supported by the cylindrical portion 105 and a radially outer portion of the flange portion 103 of the introduction-side rotor portion 13d. In addition, the introduction-side rotating vanes 91 are located radially outward of a front portion of the rotating vane outer tubular portion 26b of the cover 26. In the cylindrical portion 105 of the introduction-side rotor portion 13d, introduction-side discharge ports 107 through which a recovery liquid of oil collected by the introduction-side rotating vanes 91 is discharged to the outside is provided at a plurality of locations in the circumferential direction. In addition, the introduction-side fixed vanes 63 are provided at a front end portion of the rotating vane outer tubular portion 26b of the cover 26. That is, the introduction-side fixed vanes 63 are located between the introduction-side rotating vanes 91 and the main rotating vanes 11 on the flow path for the gas A (downstream of the introduction-side rotating vanes 91 and upstream of the main rotating vanes 11). Similarly to the main fixed vanes 15, the introduction-side fixed vanes 63 are provided as a plurality of swirler vanes arranged at equal intervals in the circumferential direction.

The support portion 99 of the main rotor portion 13a has, at a plurality of locations in the circumferential direction, discharge holes 111 through which the gas A is discharged to the hollow portion 31 of the rotary shaft 3, and the discharge holes 111 form part of the flow path for the gas A. The discharge-side rotating vanes 95 are located between the support portion 99 of the main rotor portion 13a and the main fixed vanes 15 of the stator 17 (downstream of the main fixed vanes 15 and upstream of the discharge holes 111 of the support portion 99). An annular partition wall 113 is provided at the rear end of the conical surface portion 97 of the main rotor portion 13a. The partition wall 113 separates an introduction space, through which the gas A having flowed out from the main rotating vanes 11 is introduced to the main fixed vanes 15, from a space in which the discharge-side rotating vanes 95 are provided. Discharge-side discharge ports 115 for discharging a recovery liquid of the oil mist separated by the discharge-side rotating vanes 95 to the above introduction space are provided at a plurality of locations in the circumferential direction in a boundary portion between the conical surface portion 97 and the partition wall 113.

In the present embodiment as well, similarly to the first embodiment, cover discharge ports 35 are formed in the rear portion of the fixed vane outer tubular portion 26a of the cover 26. The cover discharge ports 35 are provided radially outward of the discharge-side discharge ports 115 such that the recovery liquid of the oil mist discharged from the discharge-side discharge ports 115 is enabled to be discharged to the outside of the cover 26 therethrough. In addition, although not shown, a housing discharge port for discharging a recovery liquid which is a collection of liquid mist is provided also in the present embodiment, similarly to the first embodiment.

Similarly to the first embodiment, the main rotor portion 13 a, the introduction-side rotor portion 13d, and the discharge-side rotor portion 13e of the rotor 13 are mounted on the rotary shaft 3 with a self-lock nut 25 so as to be non-rotatable relative to the rotary shaft 3. On the other hand, the stator 17 is fixed to the housing 9 by co-fastening a main fixed vane portion 17a and a cover portion 17b, which are formed separately, to the housing 9 with screw members 75 such as bolts.

Also, in the present embodiment as well, similarly to the case of the second embodiment, as shown in Figs. 7A to 7C, the cover discharge ports 35 may include a plurality of main discharge ports 35A provided at equal intervals in the circumferential direction of the cover 26 and sub discharge ports 35B which are provided between the adjacent main discharge ports 35A, 35A and each has an opening area smaller than that of each main discharge port 35A, the cover 26 may have a plurality of bosses 77 which are provided at equal intervals in the circumferential direction and project radially inward, and the main discharge ports 35A of the cover 26 may be provided adjacently to and upstream of the bosses 77 in the swirling direction S of the gas A. In this case, the details of the configuration of the cover discharge ports 35 are the same as the mode described in connection with the second embodiment, and the description thereof is omitted.

In the mist separator 1 according to the present embodiment, separation performance is further improved since the introduction-side rotating vanes 91 and the discharge-side rotating vanes 95 are provided in addition to the main rotating vanes 11, and it is possible to reduce the pressure difference between the inside and the outside of the mist separator since the fixed vanes 63 are provided at the introduction side. It should be noted that only either the introduction-side rotating vanes 91 (and the introduction-side fixed vanes 63) or the discharge-side rotating vanes 95 may be provided.

Although the present invention has been described above in connection with the preferred embodiments thereof with reference to the accompanying drawings, numerous additions, changes, or deletions can be made without departing from the gist of the present invention. Accordingly, such additions, changes, or deletions are to be construed as included in the scope of the present invention.

### [Reference Numerals]

- 1: Mist separator
- 11: Main rotating vane
- 13: Rotor
- 135: Main fixed vane
- 17: Stator
- 26: Cover
- 35: Cover discharge port
- A: Gas (air)

## Claims

1. A mist separator for separating a liquid mist from a gas containing the liquid mist, the mist separator comprising:
a rotor fixed to a hollow rotary shaft and including main rotating vanes; and
a stator axially juxtaposed to the rotor, the stator including main fixed vanes located downstream of the main rotating vanes on a flow path for the gas, and a cover to cover outer peripheries of the main fixed vanes and the main rotating vanes,
wherein the main fixed vanes are formed so as to cause the gas to flow radially inward from the outer peripheries thereof while a flow rate of the gas is decreased, and
the cover is provided with a cover discharge port to discharge a recovery liquid which is a collection of the liquid mist to an outside of the cover.

2. The mist separator as claimed in claim 1, wherein the stator further includes introduction-side fixed vanes located upstream of the main rotating vanes on the flow path for the gas.

3. The mist separator as claimed in claim 2, further comprising an annular introduction-side fixed vane cover that covers a front side of the introduction-side fixed vanes, wherein the introduction-side fixed vane cover is provided with a discharge slit to discharge a recovery liquid which is a collection of the liquid mist to an outside of the introduction-side fixed vane cover.

4. The mist separator as claimed in claim 3, further comprising:
a housing to accommodate the rotor and the stator therein; and
an introduction port located radially outward of the cover in the housing and to introduce the gas into an introduction space formed between the housing and the cover from an oblique direction relative to a radial direction,
wherein the discharge slit is provided in a region within 180° at an upstream side in a swirling direction of the gas from the introduction port in a circumferential direction of the introduction-side fixed vane cover.

5. The mist separator as claimed in any one of claims 1 to 4, wherein
the cover discharge port includes a plurality of main discharge ports provided at equal intervals in a circumferential direction of the cover and a sub discharge port provided between the adjacent main discharge ports and having an opening area smaller than that of each main discharge port,
the cover has a plurality of bosses provided at equal intervals in the circumferential direction thereof and projecting radially inward, and
the main discharge ports of the cover are provided adjacently to and upstream of the bosses in a swirling direction of the gas.

6. The mist separator as claimed in claim 2 or any one of claims 3 to 5 as dependent from claim 2, wherein an outwardly-projecting cover flange is provided at a portion of an outer peripheral surface of the cover between the cover discharge port and the introduction-side fixed vanes.

7. The mist separator as claimed in any one of claims 1 to 6, wherein a gap is defined between an inner peripheral surface of the cover and an outer periphery end of each main fixed vane.

8. The mist separator as claimed in any one of claims 1 to 7, wherein the mist separator is disposed within an accessory gear box of an aircraft engine to separate oil from an air containing an oil mist.
